**Europäisches Patentamt**

**European Patent Office**

**Office européen des brevets**

(19)

(11) Numéro de publication : **0 333 585 B1**

(12)

# FASCICULE DE BREVET EUROPEEN

(45) Date de publication du fascicule du brevet :
**29.04.92 Bulletin 92/18**

(51) Int. Cl.⁵ : **F02K 9/78, // F02C3/073**

(21) Numéro de dépôt : **89400714.5**

(22) Date de dépôt : **15.03.89**

(54) **Propulseur combiné turbo-fusée aérobie.**

(30) Priorité : **16.03.88 FR 8803367**

(43) Date de publication de la demande :
**20.09.89 Bulletin 89/38**

(45) Mention de la délivrance du brevet :
**29.04.92 Bulletin 92/18**

(84) Etats contractants désignés :
**DE FR GB**

(56) Documents cités :
**DE-A- 2 146 793**
**FR-A- 1 136 237**
**FR-A- 2 215 538**
**US-A- 3 237 400**
**US-A- 3 747 339**
**US-A- 3 812 672**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Mirville, François Jean-Pierre**
**3, rue de la Contrescarpe**
**F-77000 Melun (FR)**

(74) Mandataire : **Moinat, François et al**
**S.N.E.C.M.A. Service des Brevets Boîte Postale 81**
**F-91003 Evry Cédex (FR)**

## Description

L'invention concerne un propulseur turbo-fusée aérobie apte à accélérer une charge depuis l'arrêt jusqu'à une vitesse hypersonique à haute altitude.

Le document FR-A-2 215 538 décrit un propulseur de ce genre dans lequel une turbine axiale alimentée en hydrogène entraîne un compresseur d'air coaxial à la turbine et relié à elle par un arbre central. La veine d'air entoure la turbine et en aval de celle-ci, l'hydrogène détendu dans la turbine est injecté dans la veine, où il est brûlé mélangé à l'air comprimé issu du compresseur. Le mélange de gaz brûlé est ensuite éjecté vers l'aval dans une tuyère divergente.

Le propulseur divulgué dans ce document souffre d'une certaine complexité dans sa réalisation dûe pour partie au nombre d'étages de compresseur nécessaires pour obtenir un bon taux de compression de l'air et pour partie à l'intégration de la turbine alimentée en hydrogène au milieu de la veine d'air mettant en oeuvre une structure mécanique compliquée.

Le document FR-A-2 215 538 décrit un propulseur dans lequel les étages de rotor de compresseur sont entraînés par les étages de la turbine de puissance, ceux-ci étant de type axial et disposés extérieurement à la veine d'air comprimé et au niveau du compresseur. La turbine est entraînée par le gaz brûlé, qui est ensuite éjecté vers l'aval dans une tuyère d'échappement arrière.

L'invention a pour but de fournir une alternative à ce genre de propulseur turbo-fusée aérobie et d'en simplifier la réalisation.

L'invention a donc pour objet un propulseur combiné turbo-fusée aérobie à hydrogène liquide comprenant un compresseur d'air axial comportant au moins un étage de rotor disposé en aval d'une roue directrice d'entrée, ledit compresseur étant entraîné par une turbine de puissance, elle-même actionnée par détente de l'hydrogène gazeux, ce dernier ainsi détendu étant ensuite injecté, pour y être brûlé, dans une chambre de combustion située dans la veine d'air comprimé entre le compresseur et une tuyère convergente-divergente.

Le circuit d'hydrogène comporte en aval d'un réservoir d'hydrogène liquide au moins une pompe à hydrogène entraînée par une turbine, l'hydrogène liquide issu de ladite pompe étant dirigé vers un premier échangeur de chaleur gaz brûlés/hydrogène constitué d'un enroulement de la canalisation d'hydrogène disposé dans la structure de la paroi de tuyère et en sortie duquel l'hydrogène gazeux est acheminé par une canalisation vers la turbine de puissance puis vers le dispositif d'injection.

Un tel échangeur de chaleur gaz brûlés, hydrogène permettant la vaporisation de l'hydrogène liquide est déja connu en soi notamment par le document US-A 3 237 400.

Un propulseur de ce genre est caractérisé selon l'invention par le fait que chaque étage de rotor de compresseur est entraîné par au moins un étage de la turbine de puissance, celle-ci étant de type axial et disposée extérieurement à la veine d'air comprimé et au niveau du compresseur et comprenant

– au moins une enceinte annulaire entourant la veine d'air comprimé et séparée de celle-ci par un moyen d'étanchéité ;
– au moins un étage de stator ;
– au moins un étage de rotor constitué d'aubes réalisées monobloc avec les aubes de rotor du compresseur d'air et dans le prolongement de celles-ci, formant ainsi avec ces dernières un ensemble rotorique commun ;
– au moins une alimentation en hydrogène en amont de l'enceinte ;
– au moins un moyen d'échappement de l'hydrogène détendu en aval de l'enceinte, apte à acheminer ledit hydrogène vers le dispositif d'injection.

Selon un mode de réalisation, le propulseur selon l'invention comporte au moins deux étages de rotor de compresseur, formant un doublet contrarotatif, dont les étages de turbine de puissance qui les entraînent sont disposés dans une enceinte annulaire de turbine unique.

Selon un second mode de réalisation, le propulseur peut comporter deux doublets d'étages de rotors contrarotatifs, les étages de rotors de turbine de puissance de chaque doublet étant disposés dans des enceintes de turbine séparées alimentées en parallèle en hydrogène, lesdites enceintes comportant des moyens d'échappement en parallèle de l'hydrogène détendu dans la turbine, vers le dispositif d'injection.

Selon une variante de ce second mode de réalisation le propulseur peut comporter deux doublets d'étages de rotors contrarotatifs, les étages de rotors de turbine de puissance des deux doublets étant disposés en série dans une enceinte de turbine unique.

D'autres caractéristiques de l'invention ainsi que des variantes d'exécution seront précisées ci-après en regard de planches de dessins parmi lesquelles :
– la figure 1 représente de façon simplifiée un premier mode de réalisation de l'invention, en coupe longitudinale ;
– la figure 2 montre le détail du circuit de by-pass de l'échangeur de chaleur air/hydrogène présenté dans la figure 1, dans la phase de vol où celui-ci est hors-circuit ;
– la figure 3 montre le détail de réalisation de la turbine à hydrogène utilisée dans le mode de réalisation de la figure 1 ;
– la figure 4 montre un second mode de réalisation d'un propulseur selon l'invention comportant deux doublets contrarotatifs de compresseur et de turbines, les parties turbines de chaque doublet contrarotatif étant disposées en parallèle dans le circuit d'alimentation en hydrogène ;

– la figure 5 montre une variante de ce second mode de réalisation à deux doublets contrarotatifs dans laquelle tous les étages de turbine sont disposés en série ;

– la figure 6 est un mode de réalisation simplifié comportant un seul doublet contrarotatif et des pompes à hydrogène intégrées au moyeu des rotors ;

– la figure 7 montre une variante du mode de réalisation de la figure 6 incorporant un second échangeur de chaleur $H_2/H_2$;

– la figure 8 montre un détail de réalisation où la turbine de puissance possède plus d'étages que le compresseur.

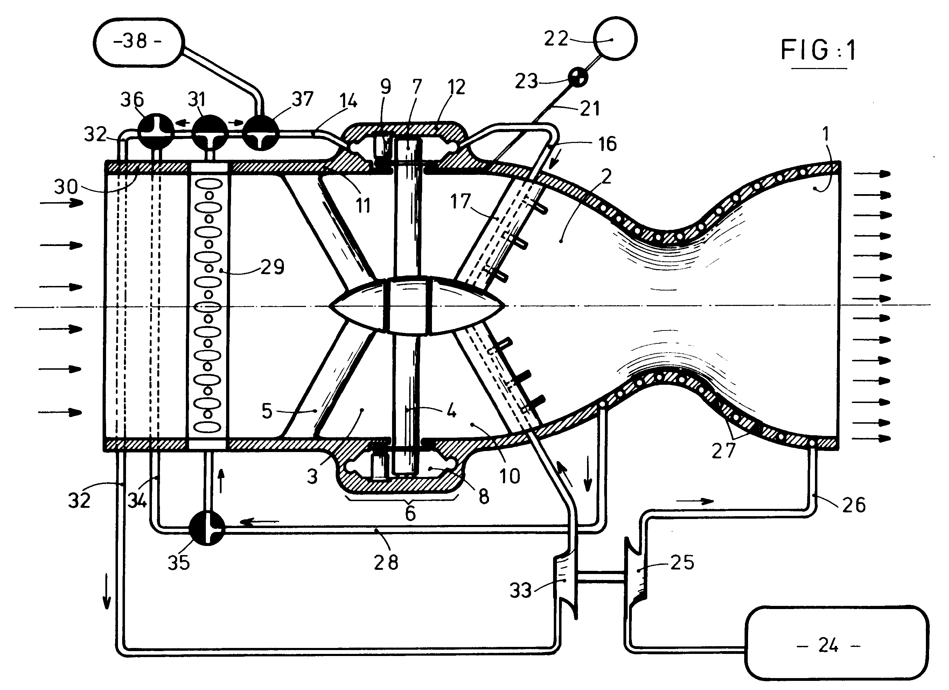

Sur la figure 1, on a schématisé le premier mode de réalisation de l'invention.

Pour obtenir, en sortie de la tuyère 1 du propulseur, la poussée qui assure la propulsion de la charge, on brûle de l'hydrogène sous pression dans une chambre de combustion 2 en présence d'air comprimé. Pour ce faire, le propulseur comporte un compresseur 3, dont l'étage rotatif 4 est disposé en aval d'une roue directrice d'entrée 5. Le rotor est entraîné par une turbine 6. La turbine possède des caractéristiques particulières propres à l'invention. Tout d'abord, le rotor de turbine est mû par un fluide différent de l'air ou du mélange gazeux issu de la combustion du carburant dans la chambre de combustion 2 ; de préférence le fluide moteur de la turbine est constitué par de l'hydrogène gazeux, qui se détend dans une enceinte 8 comportant un étage de stator 9 et l'étage de rotor de la turbine. Selon une autre caractéristique propre à l'invention, le rotor de turbine est constitué d'aubes 7 disposées dans le prolongement des aubes de l'étage rotorique du compresseur d'air 3 et monobloc avec celles-ci.

De ce fait l'enceinte 8, dans laquelle a lieu la détente de l'hydrogène assurant la mise en puissance de la turbine, est disposée de façon annulaire autour de la veine d'air 10 au droit de l'étage de rotor du compresseur 3.

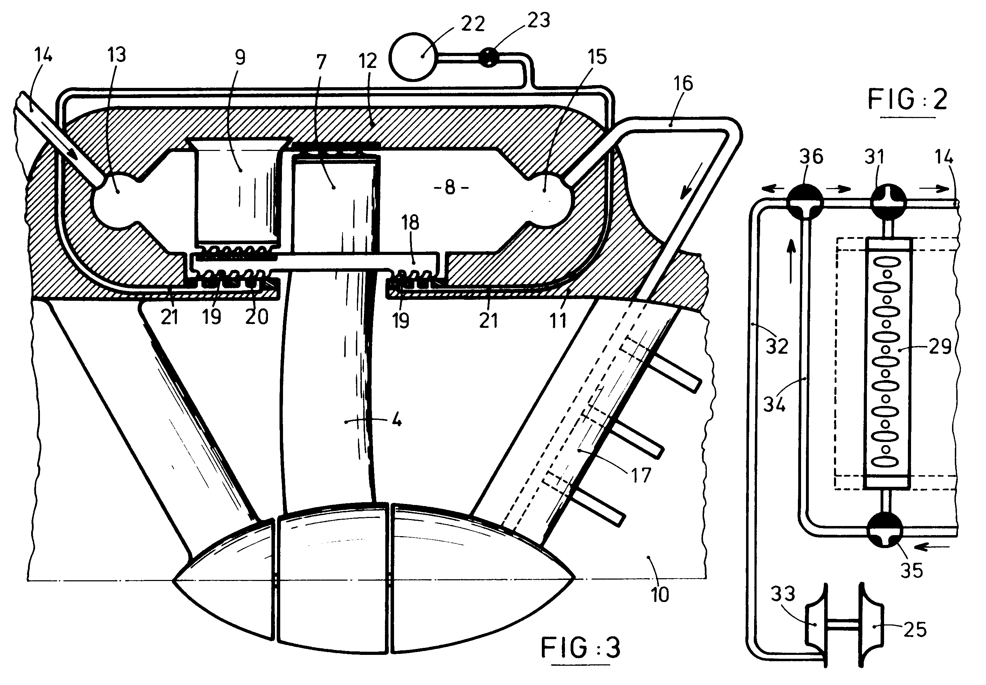

La structure particulière de la turbine peut être du type de celle représentée à la figure 3. L'enceinte 8 constituée entre le carter 11 de la veine d'air 10 et un carter de turbine 12 comporte un étage d'aubes de stator 9 en amont duquel est disposé un anneau 13 collecteur d'hydrogène relié à au moins une tubulure 14 d'alimentation du circuit d'hydrogène dont le détail sera précisé plus loin.

De même, en aval de l'enceinte 8, est réalisé un anneau récepteur 15 pour l'hydrogène ayant travaillé dans la turbine, ledit anneau 15 étant relié à une tubulure 16 d'échappement de l'hydrogène vers le dispositif d'injection 17 de la chambre de combustion 2.

Comme on le voit sur la figure 3, l'ensemble rotorique comportant les aubes 4 du compresseur d'air et les aubes 7 de la turbine à hydrogène traverse le carter 11 dans sa partie intermédiaire entre la veine 10 et l'enceinte 8. Pour assurer l'étanchéité entre la veine et l'enceinte à cet endroit et éviter une infiltration d'hydrogène dans la veine d'air 10, ce qui provoquerait une auto-inflammation de l'hydrogène dans la veine 10, les aubes de rotor comportent entre le profil 4 d'aube de compresseur et le profil 7 d'aube de la turbine une plateforme 18 débordant du profil en amont et en aval de celui-ci, ladite plateforme étant située du côté du carter 11 intérieur à l'enceinte de turbine et comportant sur sa surface en regard dudit carter des joints labyrinthe 19 coopérant avec une matière abradable 20 dudit carter. Pour parfaire l'étanchéité entre l'enceinte de turbine alimentée en hydrogène sous pression et la veine d'air alimentée en air comprimé, on organise selon l'invention une fuite contrôlée d'un gaz neutre par exemple de l'hélium sous pression au travers des surfaces coopérantes des joints labyrinthes 19 et des abradables 20.

Cette fuite contrôlée est réalisée par injection d'hélium dans l'abradable 20 par des canalisations 21, provenant d'un réservoir externe sphérique 22, où l'hélium est stocké à une pression très supérieure à celle régnant dans les deux veines d'air et d'hydrogène. Le débit d'hélium est régulé par une vanne 23 disposée sur la canalisation 21.

Le circuit d'hydrogène comporte un réservoir 24 de stockage d'hydrogène liquide $LH_2$, relié à une pompe 25 dont la sortie débouche par une tubulure 26 dans un échangeur de chaleur 27 constitué par un enroulement de ladite canalisation autour de, ou dans la structure de paroi de la tuyère 1, l'hydrogène parcourant cet enroulement depuis l'aval de la paroi de tuyère jusqu'à l'amont de celle-ci et se réchauffant progressivement en empruntant des calories au flux de gaz de combustion de la veine 10. Après ce premier échauffement, l'hydrogène, devenu gazeux, est dirigé par une canalisation 28 vers un second échangeur de chaleur 29 disposé dans la manche d'entrée d'air 30, échangeur dans lequel en prélevant des calories à l'air avant compression, le circuit d'hydrogène augmente son énergie potentielle tout en permettant une meilleure compression de l'air qui s'en trouve refroidi.

En sortie de l'échangeur 29, le circuit d'hydrogène se divise en deux parties au moyen d'une vanne 31 à trois voies et trois lumières, une partie du circuit étant raccordée à la tubulure 14 d'alimentation de la turbine de puissance 6 tandis que l'autre partie 32 du circuit dirige une part du débit d'hydrogène vers une turbine annexe 33 qui entraîne mécaniquement la pompe à hydrogène 25. Le flux d'$H_2$, est ensuite dirigé vers le dispositif d'injection 17.

Pour permettre la mise hors-circuit de l'échangeur de chaleur 29, lors des phases de montée à faible altitude et faible Mach, l'échangeur 29 peut être by-passé au moyen d'une canalisation externe 34 reliée d'une part à la tubulure 28 en amont de l'échangeur et d'autre part aux tubulures 32 et 14, par deux vannes 35 et 36 identiques à la vanne 31, la vanne 36 assurant la même fonction de séparation des débits que la vanne 31, lors des phases de fonctionnement sans échangeur de chaleur.

Une vanne similaire 37 permet au démarrage de relier la canalisation 14 à un réservoir 38 de gaz sous très forte pression servant de démarreur pour initier la rotation de la turbine de puissance 6 et de la turbo-pompe 33, 25.

En alternative à ce type de démarreur, on peut également utiliser un démarreur pyrotechnique dont les gaz de combustion procureront l'énergie nécessaire à l'entraînement de la turbine jusqu'à la mise en fonctionnement continu du circuit d'hydrogène.

Le fonctionnement d'un tel propulseur dans son domaine de vol est le suivant.

Le moteur est mis en route au moyen du démarreur 38 qui permet d'entraîner les turbines. Pendant le point fixe et le vol à faible altitude (inférieure à 10000 m) et faible Mach (inférieur à 2), l'échangeur de chaleur 29 est mis hors circuit, ainsi que le représente la figure 2.

Pendant la phase suivante du vol, pour une altitude comprise entre 10000 et 30000 mètres et un nombre de Mach compris entre 2 et 6, l'échangeur de chaleur 29 fonctionne en série avec l'échangeur 27, ce qui apporte un gain d'impulsion spécifique Isp.

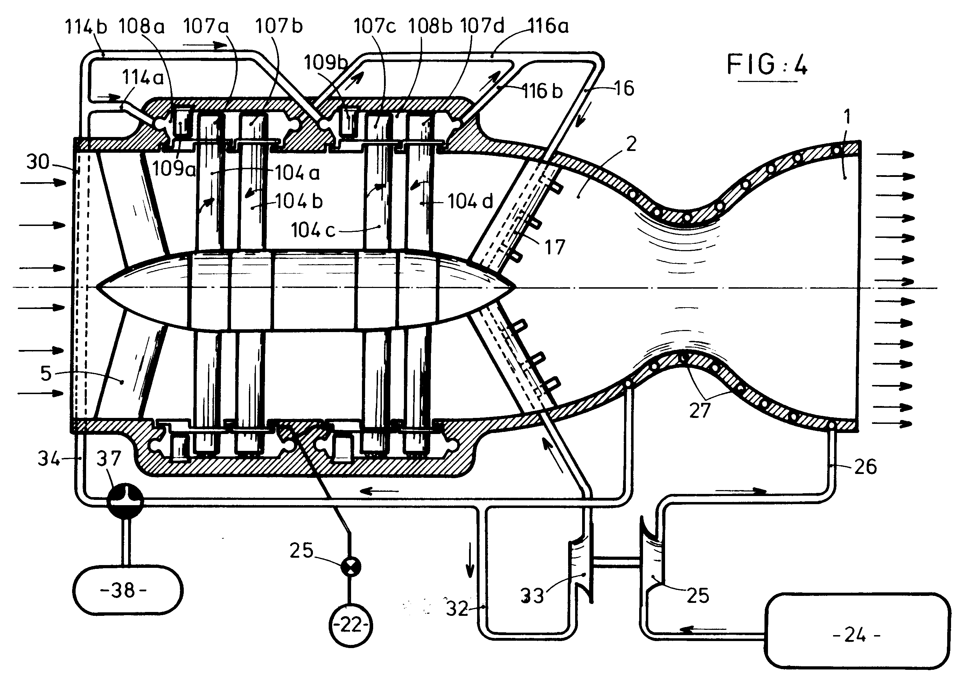

La figure 4 montre un second mode de réalisation de l'invention comportant un compresseur muni de quatre ensembles rotors formant deux doublets contrarotatifs (104a-107a, 104b-107b, 104c-107c, 104d-107d). Sur cette figure tous les éléments identiques à ceux de la figure précédente portent les mêmes numéros de référence tandis que les éléments modifiés portent des numéros augmentés d'une centaine.

Dans le mode de réalisation de la figure 4, le circuit de carburant est identique à celui de la figure 1, à l'exception de l'absence d'échangeur de chaleur dans la manche d'entrée d'air 30. En outre les parties turbine de chaque doublet contrarotatif (respectivement 107a, 107b ; 107c, 107d) sont disposées de façon à réaliser deux turbines de puissance en parallèle. On réalise pour ce faire deux enceintes annulaires 108a et 108b alimentées en parallèle par deux tubulures d'alimentation en hydrogène 114a et 114b issues de la canalisation 34.

L'échappement des deux enceintes des turbines de puissance 108a et 108b s'effectue alors au moyen de deux tubulures 116a et 116b qui rejoignent la canalisation 16 d'alimentation du dispositif d'injection.

Dans cette réalisation, l'absence d'échangeur de chaleur dans la manche d'entrée d'air, et donc le fait que le circuit de carburant dispose d'une plus faible énergie potentielle que dans la variante précédente, est compensée par l'existence des deux turbines de puissance travaillant en parallèle et entraînant quatre étages de rotors. Cette disposition des turbines de puissance en parallèle est possible lorsqu'on dispose en sortie de l'échangeur 27 d'un fort débit d'hydrogène mais d'une faible pression. La multiplication du nombre des étages des rotors permet, malgré une vitesse de rotation plus faible, d'obtenir un taux de compression dans la veine d'air identique voire supérieur à celui du mode de réalisation précédent.

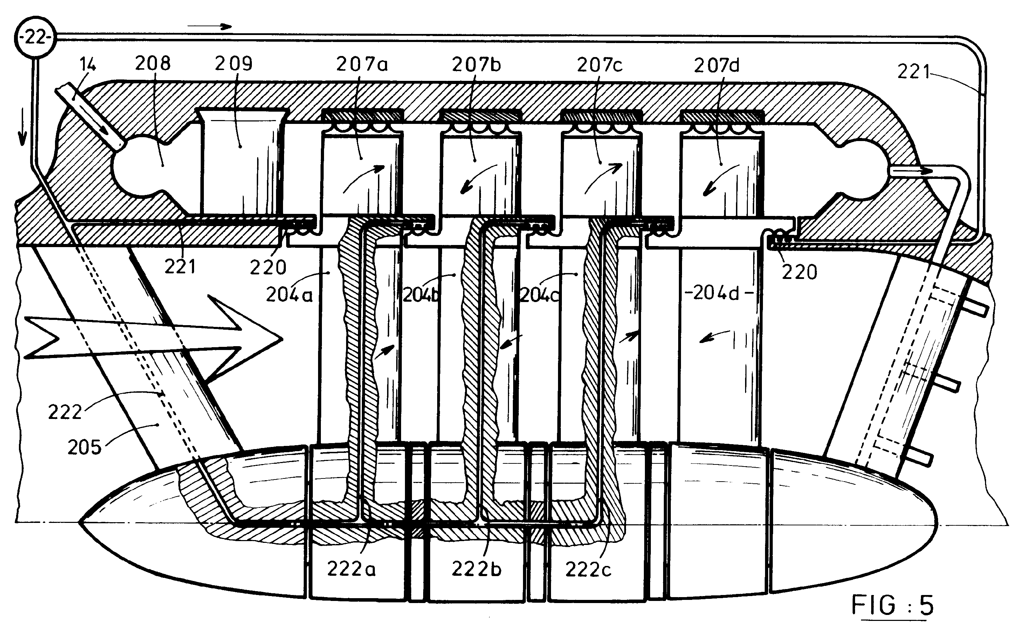

La figure 5 est une variante du mode de réalisation à deux doublets contrarotatifs dans laquelle tous les étages de turbine travaillent en série. L'enceinte de turbine 208 est donc unique et comporte en amont un étage de stator 209 et en aval les quatre rotors 207a à 207d tournant en sens opposés les uns des autres.

Cette disposition en série est plus directement utilisable lorsqu'on a en sortie de l'échangeur 27 un faible débit d'hydrogène sous forte pression. L'alimentation en série permet d'obtenir des impulsions spécifiques plus élevées que l'alimentation en parallèle à cause du faible débit d'hydrogène mais nécessite une pompe à LH$_2$ à rapport de pression plus élevé et des systèmes d'étanchéité plus performants. Ainsi on peut être amené à réaliser un circuit d'hélium plus complexe comprenant, outre les alimentations directes 221 des joints labyrinthes 220 du premier et du dernier étage, une alimentation en parallèle des joints inter-rotors. Cette alimentation peut être réalisée au moyen d'une tubulure 222 empruntant une des aubes de la roue directrice d'entrée 205 et l'axe central du compresseur et se séparant en canalisations 222a, 222b, 222c réalisées dans les aubes de compresseur 204a, 204b, 204c pour alimenter les joints labyrinthes réalisés entre les plateformes des aubes 207a, 207b ; 207b, 207c, ; et 207c, 207d.

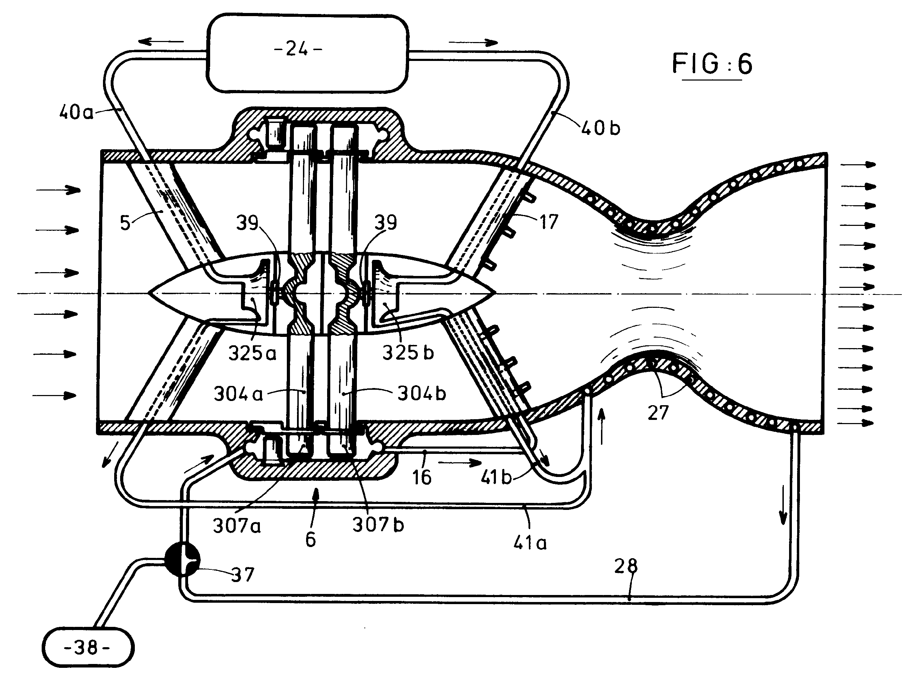

Dans le mode de réalisation simplifié de la figure 6, le propulseur comporte un seul doublet contrarotatif et ne comporte pas de turbo-pompe extérieure au système de propulsion. En effet chaque rotor de turbine de puissance 307a, 307b entraîne une pompe à hydrogène liquide 325a, 325b disposée concentriquement au moyeu de chaque rotor. Deux multiplicateurs de vitesse à engrenages 39 disposés entre le disque de chaque rotor et la pompe correspondante assurent une vitesse de rotation suffisante pour les pompes à hydrogène.

Dans ce cas de figure, le circuit d'hydrogène est simplifié. Deux canalisations 40a, 40b issues du réservoir 24 distribuent l'hydrogène liquide aux deux pompes 325a, 325b en empruntant respectivement les bras radiaux de la directrice d'entrée 5 et du système d'injection 17. En sortie des pompes, les deux circuits d'hydrogène 41a, 41b se rejoignent en amont de l'échangeur 27, puis la canalisation 28 amène l'hydrogène à l'état gazeux, après apport d'énergie dans l'échangeur 27, à l'entrée de la turbine de puissance 6 dont les deux étages de rotors 307a, 307b sont en série, l'échappement de la turbine s'effectuant comme dans les cas précédents vers le dispositif d'injection 17.

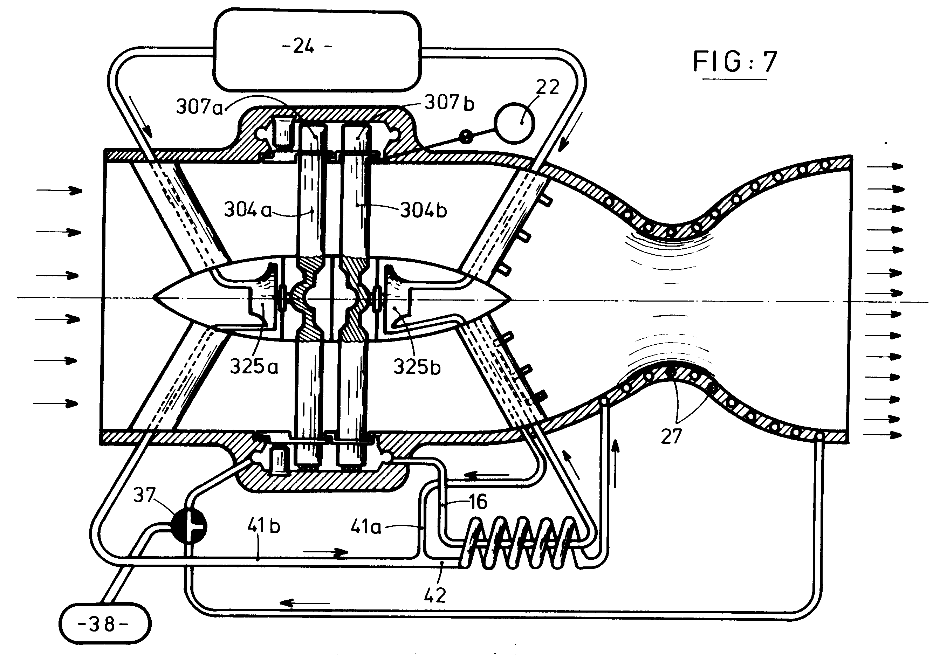

Dans la variante de réalisation de la figure 7, le circuit d'hydrogène est complété par la présence d'un second échangeur de chaleur $H_2/H_2$. Les tubulures 41a, 41b de sortie des pompes 325a, 325b se rejoignent pour former une canalisation unique 42 conformée en enroulement autour de la tubulure 16 issue de la turbine de puissance. Ainsi l'hydrogène liquide issu des pompes subit-il un premier échauffement par prélèvement de calories à l'hydrogène issu de la turbine, avant de subir un second échauffement dans l'échangeur 27. Cette disposition permet d'augmenter l'énergie disponible de l'hydrogène en entrée de la turbine et donc de récupérer une puissance plus grande sur la turbine. On peut ainsi augmenter la puissance des pompes à hydrogène, donc la pression de sortie desdites pompes et par conséquent la pression de la chambre principale, ce qui permet de réaliser un gain d'impulsion spécifique du propulseur.

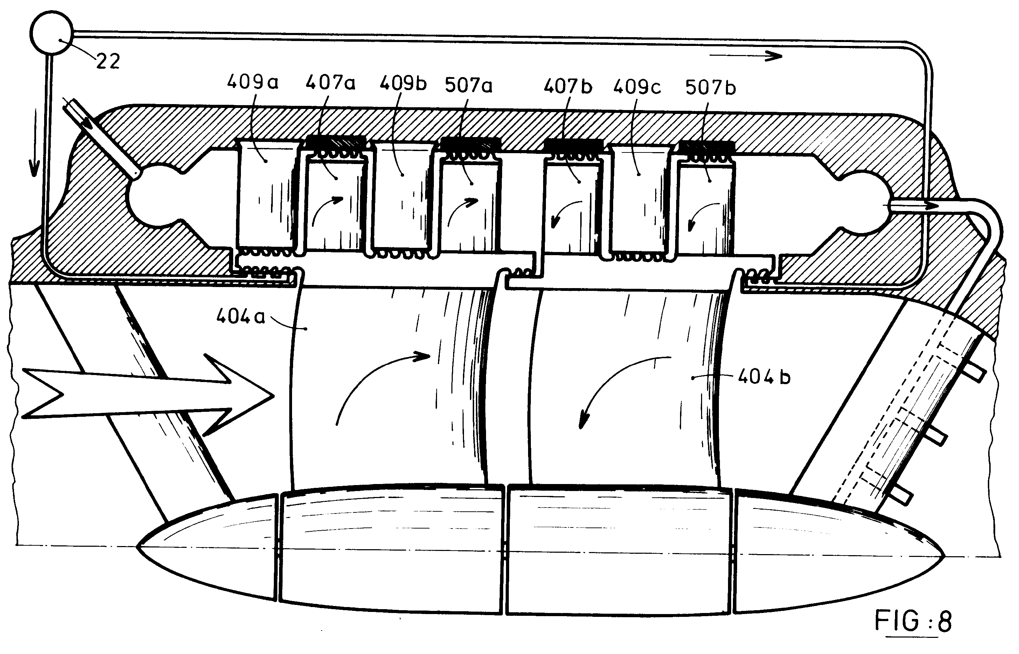

L'invention n'est pas limitée aux seuls modes d'exécution définis ci-dessus et peut comporter des variantes de détail dans chacun de ses sous-ensembles. Ainsi par exemple, comme montré à la figure 8, on peut réaliser une turbine possédant un nombre d'étages supérieur à celui du compresseur.

Dans cette réalisation pour chaque aube du rotor de compresseur du doublet contrarotatif, on a réalisé deux aubes de rotor de turbine (respectivement 407a, 507a et 407b, 507b).

De ce fait, trois étages de stator sont réalisés, l'un 409a en amont de l'aube 407a, le second 409b entre les aubes 407a et 507a et le troisième 409c entre les aubes 407b et 507b, la présence d'un étage de stator entre les aubes 507a et 407b étant inutile en raison des sens de rotation inverses desdits rotors.

Comme autre variante possible, on peut citer la présence d'un échangeur de chaleur air/hydrogène identique à celui de la figure 1, dans les modes de réalisation des figures 4 à 8.

Dans les deux cas précités, on apporte ainsi un gain de puissance à la turbine de puissance du propulseur.

## Revendications

1. Propulseur combiné turbo-fusée aérobie à hydrogène liquide comprenant un compresseur d'air axial comportant au moins un étage de rotor (4, 104, 204, 304, 404) disposé en aval d'une roue directrice d'entrée (5), ledit compresseur étant entraîné par une turbine de puissance (6), elle-même actionnée par détente d'hydrogène à l'état gazeux, ce dernier ainsi détendu étant ensuite injecté, pour y être brûlé, dans une chambre de combustion (2) située dans la veine d'air comprimé entre le compresseur et une tuyère convergente-divergente (1), propulseur dont le circuit d'hydrogène comporte en aval d'un réservoir d'hydrogène liquide (24), au moins une pompe à hydrogène (25, 325) entraînée par une turbine, l'hydrogène liquide issu de ladite pompe étant dirigé vers un premier échangeur de chaleur (27) gaz brûlés/hydrogène constitué d'un enroulement de la canalisation d'hydrogène disposé dans la structure de la paroi de tuyère et en sortie duquel l'hydrogène est acheminé par une canalisation vers la turbine de puissance puis vers le dispositif d'injection, caractérisé en ce que chaque étage de rotor de compresseur est entraîné par au moins un étage de la turbine de puissance, celle-ci étant de type axial et disposée extérieurement à la veine d'air comprimé et au niveau du compresseur (4, 104, 204, 304, 404) et comprenant

– au moins une enceinte annulaire (8) entourant la veine d'air comprimé et séparée de celle-ci par un moyen d'étanchéité ;
– au moins un étage de stator (9, 109...409) ;
– au moins un étage de rotor constitué d'aubes réalisées monobloc avec les aubes de rotor de compresseur d'air et dans le prolongement de celles-ci formant ainsi avec ces dernières un ensemble rotorique commun ;
– au moins une alimentation en hydrogène en amont de l'enceinte (8) ;
– au moins un moyen d'échappement de l'hydrogène détendu en aval de l'enceinte, apte à acheminer ledit hydrogène vers le dispositif d'injection.

2. Propulseur selon la revendication 1, caractérisé en ce que le moyen d'étanchéité séparant la veine d'air comprimé et l'enceinte de la turbine de puissance, est du type à joints labyrinthes (19, 20...) et comporte un moyen (21) d'introduction, depuis un réservoir (22) d'hélium sous pression réalisant une fuite contrôlée d'hélium vers la veine d'air et l'enceinte de la turbine de puissance.

3. Propulseur selon l'une quelconque des revendications 1 ou 2, caractérisé en ce que chaque étage de compresseur d'air est entraîné par plusieurs étages de la turbine de puissance.

4. Propulseur selon l'une quelconque des revendications 1 à 3, caractérisé en ce qu'il comporte au moins deux étages de rotor de compresseur (104a, 104b; ... 404a, 404b), formant un doublet contrarotatif, dont les étages de turbine de puissance (107a, 107b, ... 407a, 407b) qui les entraînent sont disposés dans une enceinte de turbine unique.

5. Propulseur selon la revendication 4, caractérisé en ce qu'il comporte deux doublets d'étages de rotors contrarotatifs, les étages de rotors de turbine de puissance de chaque doublet (respectivement 107a, 107b ; 107c, 107d) étant disposés dans des enceintes de turbine séparées alimentées en parallèle en hydrogène (en 114a, 114b) lesdites enceintes comportant des moyens d'échappement en parallèle (116a, 116b) de l'hydrogène détendu dans la turbine, vers le dispositif d'injection (17).

6. Propulseur selon la revendication 4, caractérisé en ce qu'il comporte deux doublets d'étages de rotors contrarotatifs, les étages de rotors de turbine de puissance (207a, 207b, 207c, 207d) des deux doublets étant disposés en série dans une enceinte de turbine unique.

7. Propulseur selon l'une quelconque des revendications 1 à 6, caractérisé en ce que le circuit d'hydrogène comporte un échangeur de chaleur d'hydrogène/hydrogène (42), apte à prélever des calories sur ledit circuit entre la turbine de puissance et le dispositif d'injection pour les transférer à la canalisation d'hydrogène liquide issue des pompes en amont du premier échangeur gaz brûlés/hydrogène (27).

8. Propulseur selon l'une quelconque des revendications 1 à 7, caractérisé en ce que le circuit d'hydrogène comporte entre le premier échangeur de chaleur (27) et l'enceinte de la turbine de puissance une dérivation (32) reliée à l'entrée d'une turbine externe (33) entraînant la pompe à hydrogène (25), la sortie de ladite turbine étant reliée au dispositif d'injection (17) d'hydrogène dans la chambre de combustion.

9. Propulseur selon l'une quelconque des revendications 1 à 8, caractérisé en ce qu'il comporte un deuxième échangeur de chaleur air/hydrogène (29) disposé dans la manche d'entrée d'air en amont du compresseur (4), ledit échangeur étant apte à prélever des calories du flux d'air et à les transmettre au circuit d'hydrogène.

10. Propulseur selon la revendication 9, caractérisé en ce qu'il comporte une canalisation de by-pass (34) sur le second échangeur apte à mettre ce dernier momentanément hors circuit au moyen d'un ensemble de vannes de commande (31, 35, 36) dans certaines phases du domaine de vol du moteur.

11. Propulseur selon l'une des revendications 9 ou 10, caractérisé en ce que la dérivation (32) d'alimentation de la turbo-pompe (33-25) est disposée entre le deuxième échangeur de chaleur (29) et l'enceinte de la turbine de puissance.

12. Propulseur selon l'une quelconque des revendications 4 à 6, caractérisé en ce qu'il comporte deux pompes à hydrogène (325a, 325b) disposées coaxialement avec les disques de rotor du doublet contrarotatif (304a, 304b), chacune des pompes étant entraînée par un des rotor (307a, 307b) de la turbine de puissance au moyen d'un boîtier multiplicateur de vitesse (39).

13. Propulseur selon l'une quelconque des revendications 1 à 12, caractérisé en ce qu'il comporte un démarreur pyrotechnique.

14. Propulseur selon l'une quelconque des revendications 1 à 12, caractérisé en ce qu'il comporte un démarreur comportant au moins un réservoir de gaz (38) muni d'une vanne de commande (37) apte à diriger un flux dudit gaz dans l'enceinte de turbine pour entraîner en rotation l'ensemble rotorique compresseur-turbine et la turbo-pompe d'hydrogène liquide.

**Patentansprüche**

1. Mit flüssigem Wasserstoff betriebenes luftatmendes Turbo-Raketen-Kombinationstriebwerk mit einem axialen Luftverdichter mit wenigstens einer stromabwärts eines Eingangsleitrades (5) angeordneten Rotorstufe (4, 104, 204, 304, 404), wobei der Verdichter von einer Leistungsturbine (6) angetrieben wird, die ihrerseits durch Entspannen von Wasserstoff in den Gaszustand betrieben wird, wobei der so entspannte Wasserstoff anschließend zur Verbrennung in eine in dem Strömungskanal der komprimierten Luft zwischen dem Verdichter und einer Diffusordüse (1) liegende Brennkammer (2) eingespritzt wird, wobei weiterhin der Wasserstoffkreis des Triebwerks wenigstens eine auf der stromabwärtigen Seite eines Behälters (24) für flüssigen Wasserstoff liegende Wasserstoffpumpe (25, 325) aufweist, die von einer Turbine angetrieben wird, und wobei der von dieser Pumpe abgegebene flüssige Wasserstoff zu einem zwischen den verbrannten Gasen und dem Wasserstoff wirksamen, aus einer in der Wandkonstruktion der Düse angeordneten Wicklung der Wasserstoffleitung bestehenden ersten Wärmetauscher (27) geleitet wird, an dessen Ausgang der Wasserstoff über eine Leitung zu der Leistungsturbine und dann zu der Einspritzvorrichtung geleitet wird, dadurch gekennzeichnet, daß jede Rotorstufe des Verdichters von einer Stufe der Leistungsturbine angetrieben wird, wobei diese Leistungsturbine eine Axialturbine ist, die außerhalb des Strömungskanals der komprimierten Luft und in Höhe des Verdichters (4, 104, 204, 304, 404) angeordnet ist und folgende Teile aufweist:
– wenigstens einen ringförmigen Mantel (8), der den Strömungskanal für die komprimierte Luft umschließt und durch ein Dichtungsmittel von diesem getrennt ist,
– wenigstens eine Statorstufe (9, 109 ... 409),
– wenigstens eine Rotorstufe, bestehend aus Schaufeln, die einstückig mit den Rotorschaufeln des Luftverdichters ausgebildet und in deren Verlängerung angeordnet sind, so daß sie mit letzteren eine gemeinsame Rotoreinheit bilden,
– wenigstens eine Wasserstoffzuführung auf der stromaufwärtigen Seite des Mantels (8),
– und wenigstens ein Auslaßmittel für den entspannten Wasserstoff auf der stromabwärtigen Seite des Mantels zum Umleiten des Wasserstoffs zu der Einspritzvorrichtung.

2. Triebwerk nach Anspruch 1, dadurch gekennzeichnet, daß das Dichtungsmittel, das den Strömungskanal für die komprimierte Luft und den Mantel der Leistungsturbine trennt, Labyrintdichtungen (19, 20 ...) sowie wenigstens ein Mittel (21) zum Einführen von Helium aus einem Behälter (22) für unter Druck stehendes Helium zu dem Luftströmungskanal und zu dem Mantel der Leistungsturbine aufweist.

3. Triebwerk nach einem der Ansprüche 1 oder 2, dadurch gekennzeichnet, daß jede der Verdichterstufen von mehreren Stufen der Leistungsturbine angetrieben wird.

4. Triebwerk nach einem der Ansprüche 1 bis 3, dadurch gekennzeichnet, daß es wenigstens zwei eine gegenläufige Doppelanordnung bildende Verdichter-Rotorstufen (104a, 104b, ... 404a, 404b) aufweist, wobei die antreibenden Stufen (107a, 107b, ... 407a, 407b) der Leistungsturbine in einem einzigen Turbinenmantel angeordnet sind.

5. Triebwerk nach Anspruch 5, dadurch gekennzeichnet, daß es zwei Doppelanordnungen von gegenläufigen Rotorstufen aufweist und daß die Leistungsturbinen-Rotorstufen jeder dieser Doppelanordnungen (107a, 107b bzw. 407a, 407b) in getrennten Turbinenmänteln angeordnet sind, die (in 114a, 114b) parallel mit Wasserstoff gespeist werden, wobei diese Mäntel parallel angeordnete Mittel (116a, 116b) für den Austritt des entspannten Wasserstoffs in die Turbine zu Einspritzvorrichtung (17) aufweisen.

6. Triebwerk nach Anspruch 4, dadurch gekennzeichnet, daß es zwei Doppelanordnungen von gegenläufigen Rotorstufen aufweist, wobei die Leistungsturbinen-Rotorstufen der beiden Doppelanordnungen (207a, 207b, 207c, 207d) in einem einzigen Turbinenmantel angeordnet sind.

7. Triebwerk nach einem der Ansprüche 1 bis 6, dadurch gekennzeichnet, daß der Wasserstoffkreis einen Wasserstoff/Wasserstoff-Wärmetauscher (42) enthält, der aus dem genannten Kreis zwischen der Leistungsturbine und der Einspritzvorrichtung Kalorien entnehmen kann, um sie stromaufwärts des zwischen den verbrannten Gasen und dem Wasserstoff wirksamen ersten Wärmetauschers (27) an die Leitung für den von den Pumpen abgegebenen flüssigen Wasserstoff zu übertragen.

8. Triebwerk nach einem der Ansprüche 1 bis 7, dadurch gekennzeichnet, daß der Wasserstoffkreis zwischen dem ersten Wärmetauscher (27) und dem Mantel der Leistungsturbine eine Abzweigung (32) aufweist, die mit dem Eingang einer die Wasserstoffpumpe (25) antreibenden externen Turbine (33) verbunden ist, wobei der Ausgang dieser Turbine mit einer Einspritzvorrichtung (17) zum Einspritzen von Wasserstoff in die Brennkammer verbunden ist.

9. Triebwerk nach einem der Ansprüche 1 bis 8, dadurch gekennzeichnet, daß es einen zweiten, Luft/Wasserstoff-Wärmetauscher umfaßt, der in dem Lufteintrittsrohr stromaufwärts des Verdichters (4) angeordnet ist und Kalorien aus der Luftstrom entnehmen und an den Wasserstoffkreis übertragen kann.

10. Triebwerk nach Anspruch 9, dadurch gekennzeichnet, daß es eine dem zweiten Wärmetauscher zugeordnete Bypass-Leitung (34) aufweist, die den zweiten Wärmetauscher in gewissen Flugbereichsphasen des Motors mit Hilfe einer Anordnung von Steuerventilen (31, 35, 36) vorübergehend aus dem Kreis herausschaltet.

11. Triebwerk nach einem der Ansprüche 9 oder 10, dadurch gekennzeichnet, daß die Abzweigung (32) der Zuführung der Turbopumpe (3325) zwischen dem zweiten Wärmetauscher (29) und dem Mantel der Leistungsturbine angeordnet ist.

12. Triebwerk nach einem der Ansprüche 4 bis 6, dadurch gekennzeichnet, daß es zwei Wasserstoffpumpen (3245a, 325b) aufweist, die koaxial mit den Rotorscheiben der gegenläufigen Doppelanordnungen (304a, 304b) angeordnet sind, und daß jede dieser Pumpen über ein Übersetzungsgetriebe (39) von einem der Rotoren (307a, 307b) der Leistungsturbine angetrieben wird.

13. Triebwerk nach einem der Ansprüche 1 bis 12, dadurch gekennzeichnet, daß es einen pyrotechnischen Anlasser besitzt.

14. Triebwerk nach einem der Ansprüche 1 bis 12, dadurch gekennzeichnet, daß es einen Anlasser besitzt, der wenigstens einen Gasbehälter (38) aufweist, der mit einem Steuerventil (37) ausgestattet ist, das eine Strömung des Gases in den Turbinenmantel leiten kann, um die Verdichter-Rotoreinheit und die Turbopumpe für den flüssigen Wasserstoff in Drehung zu versetzen.

## Claims

1. Liquid hydrogen air-breathing combined turbo-rocket propulsion unit comprising an axial air compressor with at least one rotor stage (4, 104, 204, 304, 404) placed downstream of an intake guide stator (5), the said compressor being driven by a power turbine (6), itself powered by the expansion of hydrogen in the gaseous state, this latter once expanded then being injected into a combustion chamber (2), for the purpose of being burned therein, situated in the stream of compressed air between the compressor and a convergent-divergent nozzle (1), a propulsion unit of which the hydrogen circuit comprises, downstream of a liquid hydrogen tank (24), at least one hydrogen pump (25, 325) driven by a turbine, the liquid hydrogen coming from the said pump being directed to a first burnt gases/hydrogen heat exchanger (27) constituted by a coil of the hydrogen pipe placed in the structure of the wall of the nozzle and on leaving which the hydrogen is fed via a pipe to the power turbine and then to the injection system, characterised in that each compressor rotor stage is driven by at least one stage of the power turbine, this latter being of the axial type and placed outside the stream of compressed air and at the point of the compressor (4, 104, 204, 304, 404) and comprising :

– at least one annular chamber (8) surrounding the compressed air stream and separated from this by a means of gas-tight sealing;

– at least one stator stage (9, 109 ... 409);

– at least one rotor stage made up of blades manufactured as a one-piece component with the rotor blades of the air compressor and as the extension of these, thus forming with the latter a common rotor assembly;

– at least one supply of hydrogen upstream of the chamber (8);

– at least one means of exhausting the expanded hydrogen downstream of the chamber, capable of conveying the said hydrogen to the injection device.

2. Propulsion unit in accordance with Claim 1, characterised in that the means of gas-tight sealing separating the stream of compressed air from the power turbine chamber is of the labyrinth seal type (19, 20 ...) and comprises a means (21 ) of introducing helium under pressure from a tank (22), so producing a controlled leakage of helium into the airstream and the power turbine chamber.

3. Propulsion unit in accordance with either of Claims 1 or 2, characterised in that each stage of the air compressor is driven by several stages of the power turbine.

4. Propulsion unit in accordance with any one of the Claims 1 to 3, characterised in that it comprises at least two stages of compressor rotors (104a, 104b; ... 404a, 404b), forming a counter-rotating doublet of which the power turbine rotor stages (107a, 107b ... 407a, 407b) which drive them are placed in a single turbine chamber.

5. Propulsion unit in accordance with Claim 4, characterised in that it comprises two doublets of counter-rotating rotor stages, the power turbine rotor stages of each doublet (respectively 107a, 107b; 107c, 107d) being placed in separate turbine chambers supplied with hydrogen in parallel (through 114a, 114b) the said chambers comprising means (116a, 116b) of exhausting in parallel to the injection device (17) the hydrogen expanded in the turbine.

6. Propulsion unit in accordance with Claim 4, characterised in that it comprises two doublets of counter-rotating rotor stages, the power turbine rotor stages of each doublet (respectively 207a, 207b; 207c, 207d) being arranged in series in a single turbine chamber.

7. Propulsion unit in accordance with any one of the Claims 1 to 6, characterised in that the hydrogen circuit comprises a hydrogen/hydrogen heat exchanger (42) capable of extracting calories from the said circuit between the power turbine and the injection device in order to transfer them to the pipe of the liquid hydrogen coming from the pumps upstream of the first burnt gases/hydrogen exchanger (27).

8. Propulsion unit in accordance with any one of the Claims 1 to 7, characterised in that the hydrogen circuit between the first heat exchanger (27) and the power turbine chamber comprises a bypass (32) connected to the inlet of an external turbine (33) driving the hydrogen pump (25), the outlet of the said turbine being connected to the device (17) for injecting hydrogen into the combustion chamber.

9. Propulsion unit in accordance with any one of the Claims 1 to 8, characterised in that it comprises a second air/hydrogen heat exchanger (29) situated in the air intake sleeve upstream of the compressor (4), the said exchanger being capable of absorbing calories from the flow of air and transferring them to the hydrogen circuit.

10. Propulsion unit in accordance with Claim 9, characterised in that it comprises a bypass pipe (34) on the second exchanger capable of putting this latter momentarily out of circuit, during certain phases of flight of the engine, by means of an assembly of control valves (31, 35, 36).

11. Propulsion unit in accordance with either of Claims 9 or 10, characterised in that the bypass (32) of the supply to the turbo-pump (33-25) is placed between the second heat exchanger (29) and the power turbine chamber.

12. Propulsion unit in accordance with any one of the Claims 4 to 6, characterised in that it comprises two hydrogen pumps (325a, 325b) arranged coaxially with the rotor discs of the counter-rotating doublets (304a, 304b), each of the pumps being driven by one of the power turbine rotors (307a, 307b) by means of a speed -multiplying gear train.

13. Propulsion unit in accordance with any one of the Claims 1 to 12, characterised in that it comprises a pyrotechnic starter.

14. Propulsion unit in accordance with any one of the Claims 1 to 12, characterised in that it comprises a starter comprising at least one gas tank (38) fitted with a control valve (37) capable of directing a flow of the said gas into the turbine chamber to cause the compressor-turbine assembly and the liquid hydrogen turbo-pump to rotate.

FIG:1

FIG:2

FIG:3

FIG. 4

EP 0 333 585 B1

FIG : 5

FIG:6

FIG : 7

EP 0 333 585 B1

409a 407a 409b 507a 407b 409c 507b

22

404a

404b

FIG : 8

EP 0 333 585 B1